# EUROPÄISCHE PATENTANMELDUNG

(11) **EP 2 620 931 A1**
(43) Veröffentlichungstag der Anmeldung: **31.07.2013**
(21) Anmeldenummer: 13150109.0
(22) Anmeldetag: 03.01.2013
(51) Int. Cl.: G08G 1/16, B60Q 1/52, B60W 40/04

(54) **Verfahren und Vorrichtung zur Unterstützung eines Fahrers**

(30) Priorität: 25.01.2012 DE 102012201046
(71) Anmelder: ROBERT BOSCH GMBH, 70442 Stuttgart (DE)
(72) Erfinder: Schoenherr, Michael, 71272 Renningen-Malmsheim (DE); Klee, Ulrich, 70176 Stuttgart-West (DE); Verdugo-Lara, Lidia-Pilar, 70182 Stuttgart (DE); Irion, Albrecht, 70563 Stuttgart (DE); Huebner, Hans-Peter, 70599 Stuttgart (DE); Schneider, Marcus, 71642 Ludwigsburg (DE)

(57) **Zusammenfassung**

Die vorliegende Erfindung betrifft Verfahren sowie Vorrichtungen zur Unterstützung eines Fahrers insbesondere eines zweiten Fahrzeugs (2) beim Überholen eines ersten Fahrzeugs (1). Nachdem ein überholendes zweites Fahrzeug (2) durch das zu überholende erste Fahrzeug (1) erkannt und dem Fahrer des ersten Fahrzeugs (1) mitgeteilt worden ist, wird eine Signalisierung an den Fahrer des zweiten Fahrzeugs (2) ausgegeben, durch welches dieser die Gewissheit erhält, dass sein Fahrzeug (2) nicht vom Fahrer des ersten Fahrzeugs (1) übersehen worden ist.

## Beschreibung

### Stand der Technik

Die vorliegende Erfindung betrifft Verfahren sowie Vorrichtungen zur Unterstützung eines Fahrers bei der Bewegung eines Fahrzeugs. Überholvorgänge bergen ein erhöhtes Risiko, eine Kollision mit anderen Verkehrsteilnehmern herbeizuführen. Während des Spurwechsels ist nicht nur der Verkehr auf der eigenen Fahrbahn zu überwachen bzw. kollisionsrelevant, sondern auch und insbesondere der Verkehr auf einer benachbarten Fahrspur. Um den Fahrer eines zum Überholvorgang ansetzenden Fahrzeugs zu unterstützen, sind im Stand der Technik sogenannte Tote-Winkel-Überwachungssysteme bekannt, welche denjenigen Bereich, welchen der Fahrer ohne einen Schulterblick vorzunehmen weder direkt noch durch einen Blick im Rückspiegel einsehen kann, überwachen. Hierzu wird beispielsweise mittels Ultraschall- und/oder Radarsensorik der Bereich neben dem zum Überholvorgang ansetzenden Fahrzeug beaufschlagt und die Reflexionen mittels eines jeweiligen Sensors empfangen. Ermittelt der Sensor ein Fahrzeug im toten Winkel, kann der Fahrer des zum Überholvorgang ansetzenden Fahrzeugs durch eine entsprechende Signalisierung (z.B. durch ein Klangzeichen oder eine optische Anzeige im Human-Machine-Interface (HMI)) informiert werden. Für den Fahrer eines auf der Überholspur herannahenden bzw. überholenden Fahrzeugs bietet ein solches System keinerlei Vorteile. Er bleibt in der Unsicherheit, ob das zu überholende Fahrzeug ihn bzw. sein Fahrzeug erkannt hat, was insbesondere in denjenigen Fällen nachteilig sein kann, in denen das auf der Überholspur befindliche Fahrzeug für eine längere Zeit im toten Winkel des zu überholenden Fahrzeugs verbleibt und/oder das zu überholende Fahrzeug den Fahrtrichtungsanzeiger in Richtung Überholspur gesetzt hat. Eine solche Situation führt mitunter zu Missverständnissen, Stresssituationen und unvorhergesehenen Reaktionen von Fahrzeugführern, so dass ein Überholvorgang nicht zufriedenstellend durch bekannte Fahrerassistenzsysteme unterstützt wird.

### Offenbarung der Erfindung

Die Erfindung verbessert den bekannten Stand der Technik durch ein Verfahren mit den Merkmalen gemäß Anspruch 1 sowie durch Vorrichtungen mit den Merkmalen der Ansprüche 2 bzw. 5.

Das erfindungsgemäße Verfahren zur Unterstützung eines Fahrers, insbesondere eines zweiten Fahrzeugs beim Überholen eines ersten Fahrzeugs, umfasst die Schritte: Erkennen eines in einem Bereich neben einem ersten Fahrzeug fahrenden zweiten Fahrzeugs. Dies kann beispielsweise lediglich mit einem Sensor, z.B. einem Kamerasystem (optisch, infrarot o.ä.), erfolgen, jedoch auch ein Senden von Signalen (z.B. Ultraschallsignale, Radarsignale, Lidarsignale, Lasersignale und/oder optisch sichtbare Signale) umfassen. Mit anderen Worten kann das erste Fahrzeug, welches auf einer ersten Fahrspur unterwegs ist, Signale in Richtung des toten Winkels seines Fahrers, also in Richtung der linken Fahrzeugseite, insbesondere mit Tendenz in Richtung Fahrzeugheck senden. Fährt ein zweites Fahrzeug in den toten Winkel des ersten Fahrzeugs ein, wird dieses erkannt bzw. mit den Signalen beaufschlagt, welche unter anderem in Richtung des ersten Fahrzeugs reflektiert werden. Im Ansprechen auf das Beaufschlagen des zweiten Fahrzeugs mit Signalen wird eine Signalisierung an den Fahrer des zweiten Fahrzeugs ausgegeben. Sofern Signale vom ersten Fahrzeug aktiv gesendet werden und nicht lediglich Reflexionen der Umgebungsstrahlung am zweiten Fahrzeug ausgewertet werden ist es grundsätzlich unerheblich, ob die auf das zweite Fahrzeug einfallenden Signale durch Mittel des zweiten Fahrzeugs oder die vom zweiten Fahrzeug reflektierten Signale durch Mittel des ersten Fahrzeugs erkannt werden. Beide Möglichkeiten sind erfindungsgemäß vorgesehen und werden im Folgenden noch genauer beleuchtet. Im Ansprechen auf eine Erkennung des zweiten Fahrzeugs durch das erste Fahrzeug erfolgt eine Signalisierung an den Fahrer des zweiten Fahrzeugs. Dies kann beispielsweise durch eine optische Anzeige, Klangzeichen oder ähnliche Signale erfolgen. Insbesondere dann, wenn das erste Fahrzeug einen Spurwechsel angezeigt hat und/oder sich das zweite Fahrzeug längere Zeit im toten Winkel des ersten Fahrzeugs befunden hat, ist eine solche Signalisierung der Fahrsicherheit zuträglich. Das Anzeigen eines Spurwechsels durch einen Fahrtrichtungsanzeiger des ersten Fahrzeugs kann beispielsweise durch einen Helligkeitssensor am zweiten Fahrzeug erkannt werden, in welchem Fall eine erfolgreiche Erfassung des zweiten Fahrzeugs durch das erste Fahrzeug besonders wertvolle Informationen für den Fahrer des zweiten Fahrzeugs darstellt. Er kann mit einem erhöhten Wahrscheinlichkeitsmaß davon ausgehen, dass der Fahrer des ersten Fahrzeugs das zweite Fahrzeug wahrgenommen hat und einen Kollisionskurs nicht einschlagen wird.

Gemäß einem zweiten Aspekt der vorliegenden Erfindung wird eine Vorrichtung zur Unterstützung eines Fahrers, insbesondere eines zweiten Fahrzeugs beim Überholen eines ersten Fahrzeugs, zur Verfügung gestellt. Erfindungsgemäß umfasst die Vorrichtung einen in dem ersten Fahrzeug angeordneten ersten Sensor und eine Signalisierungseinheit. Der erste Sensor ist eingerichtet, einen Bereich neben dem ersten Fahrzeug (umfassend den toten Winkel) zu erfassen bzw. Signale aus diesem Bereich zu empfangen. Ein vorheriges Aussenden solcher Signale ist durch eine optionale Sendeeinrichtung möglich. Es kommt lediglich darauf an, dass der Sensor die Gegenwart eines zweiten Fahrzeugs im Bereich des toten Winkels des ersten Fahrzeugs erkennen kann. Grundsätzlich sind somit auch Kamerasysteme z.B. auf Infrarot- und/oder optischer Basis einsetzbar, solange eine geeignete Objekterkennung die Präsenz eines zweiten Fahrzeugs mit Sicherheit feststellen kann. Die Signalisierungseinheit ist eingerichtet, im Ansprechen auf ein vom ersten Sensor erfasstes zweites Fahrzeug eine Signalisierung an den Fahrer des zweiten Fahrzeugs auszugeben, welche für diesen gut wahrnehmbar ausgestaltet sein kann, auch ohne dass er seinen Blick wesentlich von der eigenen Fahrbahn abwenden muss. Durch die Signalisierungseinheit des ersten Fahrzeugs wird der Fahrer des zweiten Fahrzeugs also darüber informiert, dass das zweite Fahrzeug vom Sensor des ersten Fahrzeugs erfasst worden ist. Eine solche Signalisierung kann insbesondere dann erforderlich und hilfreich sein, wenn das erste Fahrzeug einen Spurwechsel mittels der Fahrtrichtungsanzeiger bereits angezeigt und/oder das zweite Fahrzeug bereits eine längere Zeit im Toten Winkel des ersten Fahrzeugs verbracht hat. Da die Information, einen Spurwechsel anzuzeigen, bereits im ersten Fahrzeug (z.B. auf einem entsprechenden Bus-System) vorliegt, ist eine Erfassung des Spurwechselwunsches durch separate Sensoren nicht erforderlich.

Die Unteransprüche zeigen bevorzugte Weiterbildungen der Erfindung.

Bevorzugt kann die Signalisierung durch eine akustische Signaleinheit des ersten Fahrzeugs, beispielsweise eine Hupe oder einen Schallgeber mit Richtcharakteristik in Richtung des ersten Fahrzeugs, erfolgen. Alternativ oder zusätzlich kann eine optische Signaleinheit des ersten Fahrzeugs Leucht-, Blink- und/oder Blitzsignale an den Fahrer des zweiten Fahrzeugs ausgeben. Diese können selbstverständlich weitere Informationen, beispielsweise in Form vom Piktogrammen und/oder Text umfassen. Die optische Signaleinheit kann an jedem geeigneten Außenbereich des ersten Fahrzeugs angeordnet sein, welcher durch ein zum Überholen ansetzendes Fahrzeug bzw. dessen Fahrer optisch wahrnehmbar ist. Beispielsweise könnte eine Anzeige in der Heckscheibe, im Bereich des hinteren Stoßfängers, einer Zierleiste, insbesondere an der linken Längsseite, des Kotflügels und/oder des Außenspiegels des ersten Fahrzeugs erfolgen.

Alternativ oder zusätzlich können Projektionsmittel im ersten Fahrzeug vorgesehen sein. Da das erste Fahrzeug mittels des ersten Sensors die Position des zweiten Fahrzeugs relativ genau bestimmen kann, können die Projektionsmittel eine, insbesondere räumlich dem zweiten Fahrzeug nachgeführte, Signalisierung in Form von Projektionen auf dem zweiten Fahrzeug durchführen. Beispielsweise könnte eine Projektion auf der Motorhaube des zweiten Fahrzeugs, in der Armaturentafel des zweiten Fahrzeugs und/oder in der Windschutzscheibe des zweiten Fahrzeugs den Fahrer darüber informieren, dass das erste Fahrzeug das zweite Fahrzeug erfolgreich erfasst hat.

Gemäß einem weiteren Aspekt der vorliegenden Erfindung wird eine Vorrichtung zur Unterstützung eines Fahrers, insbesondere eines zweiten Fahrzeugs beim Überholen eines ersten Fahrzeugs, vorgeschlagen. Erfindungsgemäß umfasst die Vorrichtung einen Empfänger, der in dem zweiten Fahrzeug angeordnet ist. Beispielsweise kann der Empfänger in der Stoßstange oder in einem Bereich der rechten Fahrzeugseite oder der Fahrzeugfront angeordnet sein. Zusätzlich umfasst die Vorrichtung eine Signalisierungseinheit. Der Empfänger ist eingerichtet, Signale aus einem Bereich neben dem zweiten Fahrzeug zu empfangen. Insbesondere kann der Bereich in Richtung eines zu überholenden Fahrzeugs auf einer rechten Nebenspur des zweiten Fahrzeugs gerichtet sein. Die Signalisierungseinheit ist eingerichtet, im Ansprechen auf ein vom Empfänger empfangenes Signal, eine Signalisierung an den Fahrer des zweiten Fahrzeugs auszugeben. Das vom Empfänger empfangene Signal kann ein Erfassungssignal eines ersten Fahrzeugs sein, welches das erste Fahrzeug ausgesendet hat, um das zweite Fahrzeug in seinem toten Winkel zu erkennen. Indem das überholende Fahrzeug (zweites Fahrzeug) die Erfassungssignale eines ersten Fahrzeugs direkt empfängt, ist es nicht auf eine Signalisierung bzw. erfindungsgemäß ausgestaltete Vorrichtung im ersten Fahrzeug angewiesen, sondern kann auch die Signale in herkömmlicher Weise mit Tote-Winkel-Assistenten ausgestatteter Fahrzeuge auswerten und seinem Fahrer eine erfolgte Erfassung, zumindest aber eine Ausstattung des zu überholenden Fahrzeugs (erstes Fahrzeug) mit einem System zur Tote-Winkel-Erkennung, signalisieren. Hierdurch kann der Überholvorgang für Alle Beteiligten sicherer gemacht werden.

Bevorzugt kann die Signalisierung als eine optische Darstellung im Kombiinstrument, insbesondere in Form vordefinierter Piktogramme, erfolgen. Alternativ oder zusätzlich kann eine optische Darstellung in einer zentralen Anzeigeeinheit der Mensch-Maschine-Schnittstelle (HME) in Form von Text, Piktogrammen oder Bildern erfolgen. Sofern das Fahrzeug über eine Kamerabasierte Abbildung der Fahrsituation des zweiten Fahrzeugs verfügt (Nacht-Sicht-Funktion o.Ä.), kann das erste Fahrzeug in dieser Abbildung als ungefährlich markiert werden. Alternativ oder zusätzlich kann diese optische Darstellung in einem Head-up-Display erfolgen. Alternativ oder zusätzlich kann die optische Darstellung in einem Bereich der A-Säule, mit anderen Worten also in einem Bereich, der in der fraglichen Situation im Bereich der optischen Achse zwischen dem Fahrer des zweiten Fahrzeugs und dem ersten Fahrzeug liegt, erfolgen. Auch hierfür bieten sich LED-Leuchteinheiten, insbesondere ausgestaltet als vordefinierte Piktogramme, an. Alternativ oder zusätzlich kann eine akustische Ausgabe innerhalb des zweiten Fahrzeugs, beispielsweise durch Lautsprecher des Kombiinstruments oder diejenigen zur Musikwiedergabe, erfolgen.

Bevorzugt kann der Empfänger eingerichtet sein, Ultraschallsignale und/oder Radarsignale und/oder Lidarsignale und/oder Lasersignale und/oder optisch sichtbare, insbesondere helligkeitsabhängige, Signale zu empfangen. Letztendlich kommt es auf eine Abstimmung des Empfängerprinzips auf diejenigen Prinzipien an, welche aktuell zur tote-Winkel-Erkennung eingesetzt werden. Durch die Funktion, optisch sichtbare Signale bzw. Helligkeitssignale, bevorzugt Helligkeitssprünge vordefinierter Frequenz, im Fahrzeugumfeld zu erkennen, kann zudem eine Erkennung eines durch das erste Fahrzeug angekündigten Spurwechsels erfolgen.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Darstellung einer Überholsituation;
- Figur 2: eine Detailansicht zweier Fahrzeuge in einer Überholsituation, umfassend Ausführungsbeispiele erfindungsgemäßer Vorrichtungen; und
- Figur 3: ein Flussdiagramm, visualisierend die Schritte eines Ausführungsbeispiels eines erfindungsgemäßen Verfahrens.

### Ausführungsformen der Erfindung

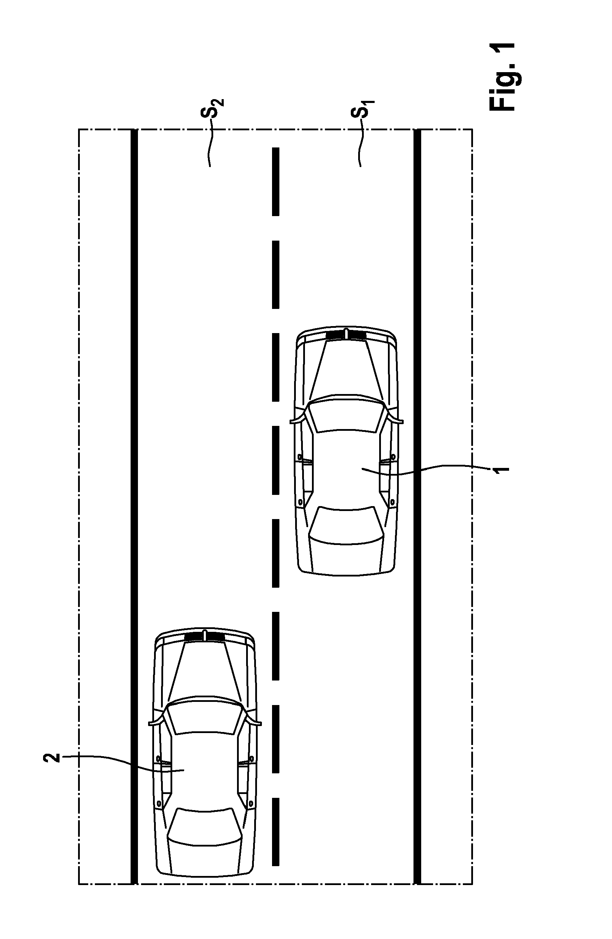

Figur 1 zeigt eine Überholsituation auf einer zweispurigen Straße, auf deren erster Fahrspur S₁ (rechte Spur) ein erstes Fahrzeug 1 und auf deren zweiter Fahrspur S₂ (Überholspur) ein zweites Fahrzeug 2 fährt. Das zweite Fahrzeug 2 ist gegenüber dem ersten Fahrzeug 1 ein Stück weit entgegen der Fahrtrichtung versetzt, wie es beispielsweise bei der Einfahrt in den toten Winkel des ersten Fahrzeugs 1 der Fall sein könnte. Die durch die vorliegende Erfindung vorgeschlagenen Verfahren bzw. Vorrichtungen sollen dem Fahrer des zweiten Fahrzeugs 2 ein sicheres und entspannteres Überholen des ersten Fahrzeugs 1 ermöglichen.

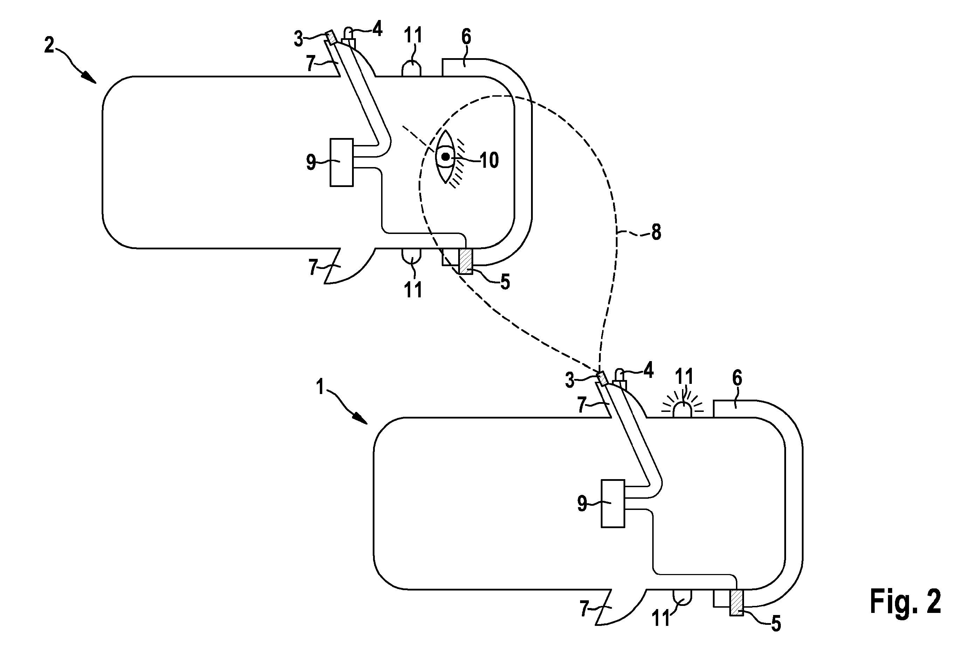

Figur 2 zeigt die in Figur 1 dargestellten Fahrzeuge 1, 2, nachdem das zweite Fahrzeug 2 in den toten Winkel des ersten Fahrzeugs 1 eingefahren ist. Beide Fahrzeuge weisen im Bereich ihres linken Spiegels 7 (Fahrerseite) einen Sensor 3 sowie eine Signalisierungseinheit 4 auf. Sensor 3 und Signalisierungseinheit 4 sind mit einer jeweiligen Verarbeitungseinheit 9 gekoppelt. Die Verarbeitungseinheit 9 ist überdies mit einem jeweiligen Empfänger 5 gekoppelt, welcher in einem vorderen rechten Bereich des jeweiligen Fahrzeugs, im Beispiel in den vorderen Stoßfänger 6, integriert. Die Verarbeitungseinheit 9 ist eingerichtet, ihren jeweiligen Sensor 3 mit einem Signal zu beaufschlagen, im Ansprechen auf welches der Sensor 3 dieses Signal in die Fahrzeugumgebung aussendet. Im Erfassungsbereich 8 befindliche Objekte können Reflexionen des ausgesendeten Signals reflektieren, welche wiederum vom Sensor 3 empfangen werden können. Mit anderen Worten ist der Sensor 3 einerseits zum Aussenden von Signalen und andererseits zum Empfangen von Reflexionen der ausgesendeten Signale eingerichtet. In Figur 2 ist das zweite Fahrzeug 2 in den Erfassungsbereich 8 des Sensors 3 des ersten Fahrzeugs 1 eingefahren, im Ansprechen worauf die Verarbeitungseinheit 9 des ersten Fahrzeugs 1 die Reflexionen der ausgesandten Signale über den Sensor 3 erhält. Infolge des Erkennens des zweiten Fahrzeugs 2 im toten Winkel prüft die Verarbeitungseinheit 9 des ersten Fahrzeugs 1, ob der Fahrtrichtungsanzeiger 11 des ersten Fahrzeugs 1 gesetzt ist. Ist dies der Fall (wie dargestellt), so steuert die Verarbeitungseinheit 9 die Signalisierungseinheit 4 an, wodurch der Fahrer des zweiten Fahrzeugs 2 darüber informiert wird, dass dem Fahrer des ersten Fahrzeugs 1 sein Aufenthalt im toten Winkel des ersten Fahrzeugs 1 mitgeteilt worden ist. Dies kann entweder durch ein einfaches Leuchtzeichen an der Außenseite des ersten Fahrzeugs 1 erfolgen, alternativ oder zusätzlich aber auch durch ein Projektionsobjekt 10 auf der Fahrzeugoberfläche des zweiten Fahrzeugs 2. In Figur 2 ist hierzu ein Auge angedeutet, welches in Richtung des Fahrers des zweiten Fahrzeugs 2 blickt. Sofern der Empfänger 5 des zweiten Fahrzeugs 2 ein Signal des Sensors 3 des ersten Fahrzeugs 1 erkennt, kann die Verarbeitungseinheit 9 des zweiten Fahrzeugs 2 eine akustische oder optische Meldung selbst veranlassen, ohne dass hierzu eine Signalisierung durch die im ersten Fahrzeug 1 angeordnete Vorrichtung erfolgen muss.

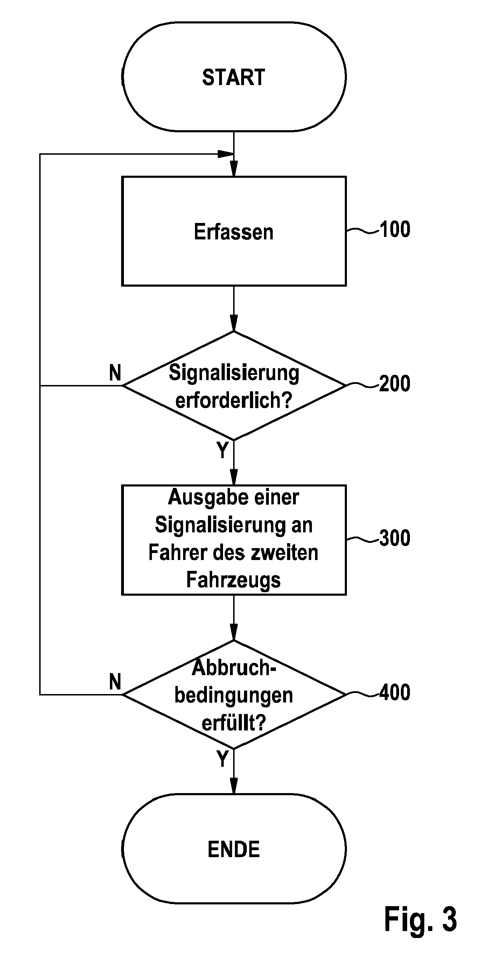

Figur 3 zeigt ein Flussdiagramm, visualisierend Schritte eines Ausführungsbeispiels eines erfindungsgemäßen Verfahrens. Das Verfahren wird gestartet, indem beispielsweise die Zündung des ersten Fahrzeugs 1 eingeschaltet, eine bestimmte Fahrstufe eingelegt und/oder eine bestimmte Mindestgeschwindigkeit überschritten wird. Anschließend erfolgt in Schritt 100 ein Erfassen eines Erfassungsbereiches 8 durch den Sensor 3. Optional kann überprüft werden, ob ein Fahrtrichtungsanzeiger 11 gesetzt ist. Infolge dessen wird in Schritt 200 entschieden, ob eine Signalisierung an den Fahrer eines zweiten Fahrzeugs 2 erforderlich ist. Ist dies nicht der Fall N, wird das Verfahren mit Schritt 100 fortgeführt. Ist dies jedoch der Fall Y, wird in Schritt 300 eine Ausgabe einer Signalisierung an den Fahrer des zweiten Fahrzeugs 2 ausgegeben. Anschließend wird in Schritt 400 überprüft, ob eine Abbruchbedingung erfüllt ist. Eine solche kann beispielsweise ein Verringern der Reisegeschwindigkeit auf einen Wert unterhalb einer vordefinierten Grenze, das Einlegen einer bestimmten Fahrstufe und/oder das Ausschalten der Zündung sein. Ist die Abbruchbedingung nicht erfüllt N, fährt das Verfahren mit Schritt 100 fort. Ist die Abbruchbedingung erfüllt Y, endet das Verfahren.

Kerngedanke der vorliegenden Erfindung ist es, einen Fahrer eines überholenden Fahrzeugs darüber in Kenntnis zu setzen, dass sein Fahrzeug durch ein zu überholendes Fahrzeug registriert und somit der Fahrer des zu überholenden Fahrzeugs informiert ist, dass ein Ausscheren seines Fahrzeugs eine Kollision herbeiführen könnte. Insbesondere wird also ein Erfassen eines zweiten Fahrzeugs durch ein in einem ersten Fahrzeug verbautes Spurwechselassistenzsystem oder ein Side-View-Assist-System an den Fahrer des zweiten Fahrzeugs signalisiert. Unsicherheiten bezüglich bevorstehender Fahrtrichtungsänderungen werden somit selbst bei gesetztem Fahrtrichtungsanzeiger eines zu überholenden Fahrzeugs vermindert bzw. vermieden, so dass entsprechende Manöver sicherer werden.

Wenn die vorliegende Erfindung vorstehend anhand konkreter Zeichnungen und Erläuterungen beschrieben worden ist, sind weitreichende Modifikationen an den Erfindungsaspekten für den Fachmann möglich, ohne den Bereich der vorliegenden Erfindung zu verlassen, deren Schutzumfang ausschließlich durch die beigefügten Ansprüche definiert wird.

## Patentansprüche

1. Verfahren zur Unterstützung eines Fahrers, insbesondere eines zweiten Fahrzeugs (2) beim Überholen eines ersten Fahrzeugs (1), umfassend die Schritte:
- Erkennen des zweiten Fahrzeugs (2) in einem Bereich neben dem ersten Fahrzeug (1) und
- Ausgeben einer Signalisierung an den Fahrer des zweiten Fahrzeugs (2), insbesondere dann, wenn das erste Fahrzeug (1) einen Spurwechsel angezeigt hat.

2. Vorrichtung zur Unterstützung eines Fahrers, insbesondere eines zweiten Fahrzeugs (2) beim Überholen eines ersten Fahrzeugs (1), wobei die Vorrichtung in dem ersten Fahrzeug (1) angeordnet ist und
- einen Sensor (3) und
- eine Signalisierungseinheit (4)
umfasst, wobei der Sensor (3) eingerichtet ist,
- einen Bereich neben dem ersten Fahrzeug (1) zu erfassen, und
die Signalisierungseinheit (4) eingerichtet ist,
- im Ansprechen auf ein vom Sensor (3) erfasstes zweites Fahrzeug (2) eine Signalisierung an den Fahrer des zweiten Fahrzeugs (2) auszugeben, insbesondere dann, wenn das erste Fahrzeug (1) einen Spurwechsel angezeigt hat.

3. Verfahren nach Anspruch 1 oder Vorrichtung nach Anspruch 2, wobei die Signalisierung
- durch eine akustische Signaleinheit des ersten Fahrzeugs (1), und/oder
- durch eine optische Signaleinheit des ersten Fahrzeugs (1), und/oder
- durch Projektionsmittel des ersten Fahrzeugs (1) auf dem zweiten Fahrzeug (2) oder innerhalb des zweiten Fahrzeugs (2) erfolgt.

4. Verfahren nach Anspruch 1 oder 3, weiter umfassend die Schritte
- Senden von Signalen durch das erste Fahrzeug (1); und
- Empfangen am zweiten Fahrzeug (2) reflektierter Signale durch das erste Fahrzeug und/oder
- Empfangen und Auswerten der vom ersten Fahrzeug (1) gesendeten Signale durch das zweite Fahrzeug (2).

5. Vorrichtung zur Unterstützung eines Fahrers, insbesondere eines zweiten Fahrzeugs (2) beim Überholen eines ersten Fahrzeugs (1), wobei die Vorrichtung in dem zweiten Fahrzeug (2) angeordnet ist und
- einen Empfänger (5) und
- eine Signalisierungseinheit (4)
umfasst, wobei der Empfänger eingerichtet ist,
- von dem ersten Fahrzeug (1) gesendete Signale, insbesondere zur Erkennung eines Fahrzeugs im Toten Winkel des ersten Fahrzeugs, zu empfangen, und
die Signalisierungseinheit (4) eingerichtet ist,
- im Ansprechen auf ein durch den Empfänger (5) empfangenes Signal eine Signalisierung an den Fahrer des zweiten Fahrzeugs (2) auszugeben.

6. Vorrichtung nach Anspruch 5, wobei die Signalisierung eine
- optische Darstellung im Kombiinstrument, und/oder
- optische Darstellung in einer zentralen Anzeigeeinheit, und/oder
- optische Darstellung in einem Head-Up-Display, und/oder
- optische Darstellung im Bereich der A-Säule, und/oder
- akustische Ausgabe innerhalb
des zweiten Fahrzeugs (2) umfasst.

7. Vorrichtung nach Anspruch 5 oder 6, wobei der Empfänger (5) eingerichtet ist,
- Ultraschallsignale und/oder
- Radarsignale, und/oder
- Lidarsignale, und/oder
- Lasersignale, und/oder
- optisch sichtbare Signale, insbesondere zur Fahrtrichtungsanzeige,
zu empfangen.
